# EUROPEAN PATENT APPLICATION

(11) **EP 4 276 142 A1**
(43) Date of publication of application: **15.11.2023**
(21) Application number: 23165621.6
(22) Date of filing: 30.03.2023
(51) Int. Cl.: C08J 11/06, C08L 67/04, C08L 101/16, B29B 9/00, B29B 11/08

(54) **METHOD FOR MULTIPLE PROCESSING OF BIODEGRADABLE THERMOPLASTIC COMPOSITE PRODUCTS**

(30) Priority: 09.05.2022 PL 44112822
(71) Applicant: Politechnika Rzeszowska im. Ignacego Lukasiewicza, 35-959 Rzeszów (PL)
(72) Inventor: Janowski, Grzegorz, 35-111 Rzeszów (PL); Fracz, Wieslaw, 35-232 Rzeszów (PL); Bak, Lukasz, 35-317 Rzeszów (PL)
(74) Representative: JWP Patent & Trademark Attorneys

(57) **Abstract**

Method according to the invention is characterised in that the biodegradable composite product comprising from 70 to 85 parts by weight of poly(3-hydroxybutyric-co-3-hydroxyvaleric acid) and from 15 to 30 parts by weight of the filler in the form of flax fibers is milled, then the obtained regranulate is dried, and then is plasticized at a temperature from 170 to 190°C and the product is formed

## Description

The object of the invention is a method for multiple processing of biodegradable thermoplastic composite products, applicable both in products loaded during use and with the possibility of being intended for contact with food.

Singh S., Mohanty A.K.: 'Wood fiber reinforced bacterial bioplastic composites: Fabrication and performance evaluation", Composites Science and Technology, 67 (2007), 1753-1763 discloses a composite of poly(3-hydroxybutyric-co-3-hydroxyvaleric acid) warp with a variable content of wood fibers, which was processed on a mini-extruder and mini-injector. As a polymer matrix, PHBV of the trade name Biopol was used in it, and as a filler, wood fibers with a fiber length from 1.6 mm to 1.65 mm and a diameter in the range from 0.3 mm to 0.4 mm were used. The produced biocomposites with PHBV warp contained from 10% by weight to 40% by weight of wood fibers.

Patent description PL 234621 B1 discloses a method for preparing thermoplastic composites reinforced with short fibers, which consists in mixing a polymer warp and short fibers of cellulose and a compatibilizer. In this known method, in two composite granulates A and B, the polymeric warp - cellulose fibers interphase is modified with a compatibilizer or an anti-compatibilizer, wherein the composite granulate A and B is obtained by melt mixing of the polymeric warp with cellulose fibers in the ratio from 70:30% by weight to 50:50% by weight, with the participation, in the A-compatibilizer granulate which is a polymer wax miscible with the warp polymer in the amount of 0.5-3% by weight in relation to the warp polymer, and in the B-anti-compatibilizer granulate which is a polymer wax immiscible with the warp polymer in the amount of 0.25-3 % by weight in relation to the warp polymer, then the A and B granulates are mixed in a molten state in the ratio from 1: 1 to 3:1 during further injection processing or extrusion, obtaining a composite with a differentiated warp-fiber interface.

The application specification of the invention CN 102850741 A discloses a biodegradable composite material , having a polyhydroxyalkanoate warp which comprises 30 - 80 parts of a hydroxyalkanoate homopolymer, 20 - 70 parts of a hydroxyalkanoate copolymer, 15 - 40 parts of fibers of plant origin, 1.5 - 6 parts of a compatibilizer, 0.5 - 10 parts of an antioxidant, and 1 - 6 parts of a processing aid.

The application specification of the invention CN 109467896 A discloses a material which contains 48 to 53 parts by weight of PHBV, 50 to 55 parts by weight of peanut protein in powder form, 14 to 15 parts by weight of coconut fiber, 30 to 40 parts by weight of starch, 20 to 24 parts by weight of chitin, 1.5 to 1.9 parts by weight of jute fiber, 3 to 6 parts by weight of wood fiber, 1.5 to 2.2 parts by weight of silane coupling agent, 20 to 30 parts by weight of polybutylene succinate, 2 to 3 parts by weight of potassium sorbate, 2 to 3 parts by weight of dehydroacetic acid, 1.4 to 1.6 parts by weight of dioctyl phthalate, 2.3 to 3.6 parts by weight of zinc stearate, 8 to 12 parts by weight of hard clay, 5 to 9 parts by weight of kaolin, 7 to 11 parts by weight of sepiolite, and 1.4 parts by weight of 2,6-di-tert-4-methylphenol.

A material which contains poly(hydroxybutyrate) (PHB) or polycaprolactane (PCL) as a polymer matrix and as a filler in a mass amount of 5% to 70% natural fibers such as sisal, sugarcane pomace, coconut, piasava, soybean, jute, ramia, curaua is known from the application specification of the invention CA 2641922 A1. Also, from 5 to 70% by weight of meal or wood dust, starch, rice husks can be used as a filler.

A material which contains poly(hydroxybutyrate) (PHB) or poly(lactic acid) (PLA) as a polymer matrix and natural fibers such as sisal, sugarcane pomace, coconut, piasava, soybean, jute, ramia, curaua as a filler in a mass amount of 5% to 70% is known from the application specification of the invention US 2009023836 A1. Also, from 5 to 70% by weight of meal or wood dust, starch, rice husks can be used as a filler.

A biodegradable thermoplastic composite and a method for obtaining thereof are known from the application specification of the invention P.434163. The composite comprises from 70 to 85 parts by weight of a polymeric warp, which is a poly(3-hydroxybutyric-co-3-hydroxyvaleric acid) and from 15 to 30 parts by weight of flax fibers, wherein the flax fibers have a length of from 0.8 mm to 1.2 mm. In a method for obtaining a biodegradable thermoplastic composite, 70 to 85 parts by weight of flax fibers with a length of 0.8 mm to 1.2 mm are mixed, and then the mixture is dried at a temperature of at most 90°C, after which the mixture is extruded with a worm extruder, and then the extrusions are granulated.

An important problem is the ever-increasing amount of polymeric waste. Polymeric materials are mostly of petrochemical origin and do not biodegrade and are recycled with various effects. PHBV, which belongs to the group of polyhydroxyalkanoates (PHA), is a polymer of natural origin, fully biodegradable, inert in living organisms and has properties similar to polypropylene - a material widely used in injection and extruded products. Due to the relatively high manufacturing costs, PHBV is rarely used for extruded or injection molded products, which is why it currently has little scope for wider deployment.

The object of the invention is to provide the reprocessing of products from biodegradable thermoplastic composite with a PHBV warp and a flax fiber filler, and to obtain products with properties similar to those of the originally manufactured product.

A method for the multiple processing of a biodegradable thermoplastic composite product comprising a polymeric warp in the form of a poly(3-hydroxybutyric-co-3-hydroxyvaleric acid) and a filler in the form of flax fibers with a length of 0.8 to 1.2 mm according to the invention is characterized in that the biodegradable composite product comprising from 70 to 85 parts by weight of poly(3-hydroxybutyric-co-3-hydroxyvaleric acid) and from 15 to 30 parts by weight of the filler in the form of flax fibers is milled, then the obtained regranulate is dried, and then is plasticized at a temperature from 170 to 190°C and the product is formed.

Preferably, the plasticized regranulate is formed by injection at a temperature in the range from 175 to 190°C.

Further advantages are obtained if the injection is carried out at a pressure from 45 MPa to 55 MPa.

Further advantages are obtained if the injection is carried out at a mold temperature of 90C.

The method allows for reprocessing of biodegradable thermoplastic composite products comprising a polymeric warp in the form of a poly(3-hydroxybutyric-co-3-hydroxyvaleric acid) and a filler in the form of flax fibers with a slight change in the properties of the reprocessed composite in relation to the originally produced composite. As a result of the conducted research, it was found that the composite can be reprocessed at least five times. Additionally, due to the use of the invention, it is possible to reduce the cost of using the composite for the manufacture of everyday products.

The object of the invention is presented in the embodiments.

The method for multiple processing of a product made of a biodegradable thermoplastic composite, in the first embodiment, is presented below. First, a product in the form of a fitting was made from a biodegradable composite containing 70 parts by weight of poly(3-hydroxybutyric-co-3-hydroxyvaleric acid) and 30 parts by weight of a filler in the form of a mixture of flax fibers with a length of 0.8 mm to 1.2 mm. The granulate is dried at a temperature of 90°C for 3 hours. The plasticized material is injected at a temperature of 190°C, the injection being carried out at a flow rate of 35 cm³/s, at a holdfast pressure of 55 MPa, a mold temperature of 90°C, a pressure time of 25 s and a cooling time of 25 s.

The obtained fitting made of biodegradable polymer composite is characterized by a tensile elastic modulus at 6702 MPa, a tensile strength of 40 MPa, impact strength according to Charpa with a notch of 14 kJ/m², a hardness of 113 N/mm², a longitudinal processing shrinkage of 0.75%, a transverse processing shrinkage of 1.75% and a processing shrinkage at the gauge of 3%.

In order to reprocess the product obtained in this way in the form of a fitting of biodegradable composite, the fitting is first milled in a plastic mill. A slow-speed mill with a filling capacity of 6 L and twelve rotor knives with a 170 mm diameter, and two static knives, equipped with a sieve with a mesh size of 5 mm, is used. Milling is carried out at a rotor speed of 250 rpm. Then, the regranulate obtained by milling is dried at a temperature of 90°C for 3 hours. Then, the plasticized material is injected at a temperature of 185°C, the injection being carried out at a flow rate of 35 cm³/s, at a holdfast pressure of 55 MPa, a mold temperature of 90°C, a pressure time of 25 s and a cooling time of 25 s.

The obtained fitting of biodegradable polymer composite is characterized by a tensile elastic modulus of 7345 MPa, tensile strength of 40.8 MPa, impact strength according to Charpa with a notch of 11 kJ/m², hardness of 112.2 N/mm², longitudinal processing shrinkage of 0.82%, transverse processing shrinkage of 1.68% and a processing shrinkage at the gauge of 2.85%.

In the second embodiment, the method for multiple processing of a biodegradable thermoplastic composite product was carried out using the product obtained in the first embodiment, in the form of a fitting. First, the product is milled in a plastics mill. A slow-speed mill with a filling capacity of 6 L, twelve rotor knives with a 170 mm diameter, and two static knives, equipped with a sieve with a 5 mm mesh, is used. Milling is carried out at a rotor speed of 250 rpm. Then, the regranulate obtained by milling is dried at a temperature of 90°C for 3 hours. Then, the plasticized material is injected at a temperature of 185°C, the injection being carried out at a flow rate of 35 cm³/s, at a holdfast pressure of 50 MPa, a mold temperature of 90°C, a pressure time of 25 s and a cooling time of 25 s.

The obtained fitting made of biodegradable polymer composite is characterized by a tensile elastic modulus at 7211 MPa, a tensile strength of 39.8 MPa, impact strength according to Charpa with a notch of 9.5 kJ/m², a hardness of 115.5 N/mm², a longitudinal processing shrinkage of 0.94%, a transverse processing shrinkage of 1.52% and a processing shrinkage at the gauge of 2.71%.

In the third embodiment, the method for multiple processing of a biodegradable thermoplastic composite product was carried out using the product in the form of a fitting obtained in the second embodiment. First, the product is milled in a plastics mill. A slow-speed mill with a filling capacity of 6 L, twelve rotor knives with a 170 mm diameter, and two static knives, equipped with a sieve with a 5 mm mesh, is used. Milling is carried out at a rotor speed of 250 rpm. Then, the regranulate obtained by milling is dried at a temperature of 90°C for 3 hours. Then, the plasticized material is injected at a temperature of 180°C, the injection being carried out at a flow rate of 35 cm³/s, at a holdfast pressure of 50 MPa, a mold temperature of 90°C, a pressure time of 25 s and a cooling time of 25 s.

The obtained fitting made of biodegradable polymer composite is characterized by a tensile elastic modulus at 7051 MPa, a tensile strength of 37.3 MPa, impact strength according to Charpa with a notch of 9.1 kJ/m², a hardness of 118.1 N/mm², a longitudinal processing shrinkage of 1.14%, a transverse processing shrinkage of 1.5% and a processing shrinkage at the gauge of 2.34%.

In the fourth embodiment, the method for multiple processing of a biodegradable thermoplastic composite product was carried out using the product obtained in the third embodiment of the method for multiple processing. First, the product in the form of a fitting is milled in a plastics mill. A slow-speed mill with a filling capacity of 6 L, twelve rotor knives with a 170 mm diameter, and two static knives, equipped with a sieve with a 5 mm mesh, is used. Milling is carried out at a rotor speed of 250 rpm. Then, the regranulate obtained by milling is dried at a temperature of 90°C for 3 hours. Then, the plasticized material is injected at a temperature of 180°C, the injection being carried out at a flow rate of 35 cm³/s, at a holdfast pressure of 45 MPa, a mold temperature of 90°C, a pressure time of 25 s and a cooling time of 25 s.

The obtained fitting of biodegradable polymer composite is characterized by a tensile elastic modulus of 7142 MPa, tensile strength of 37.6 MPa, impact strength according to Charpa with a notch of 10.1 kJ/m², hardness of 115.0 N/mm², longitudinal processing shrinkage of 1.28%, transverse processing shrinkage of 1.44% and a processing shrinkage at the gauge of 1.94%.

In the fifth embodiment, the method for multiple processing of a biodegradable thermoplastic composite product was carried out using the product in the form of a fitting obtained in the fourth embodiment. First, the product in the form of a fitting is milled in a plastics mill. A slow-speed mill with a filling capacity of 6 L, twelve rotor knives with a 170 mm diameter, and two static knives, equipped with a sieve with a 5 mm mesh, is used. Milling is carried out at a rotor speed of 250 rpm. Then, the regranulate obtained by milling is dried at a temperature of 90°C for 3 hours. Then, the plasticized material is injected at a temperature of 175°C, the injection being carried out at a flow rate of 35 cm³/s, at a holdfast pressure of 45 MPa, a mold temperature of 90°C, a pressure time of 25 s and a cooling time of 25 s.

The obtained fitting made of biodegradable polymer composite is characterized by a tensile elastic modulus at 7030 MPa, a tensile strength of 36.6 MPa, impact strength according to Charpa with a notch of 10 kJ/m², a hardness of 117.8 N/mm², a longitudinal processing shrinkage of 1.37%, a transverse processing shrinkage of 1.39% and a processing shrinkage at the gauge of 1.47%.

## Claims

1. A method for multiple processing of a biodegradable thermoplastic composite product comprising a polymeric warp in the form of a poly(3-hydroxybutyric-co-3-hydroxyvaleric acid) and a filler in the form of flax fibers with a length of 0.8 to 1.2 mm, **characterized in that** the biodegradable composite product comprising from 70 to 85 parts by weight of poly(3-hydroxybutyric-co-3-hydroxyvaleric acid) and from 15 to 30 parts by weight of the filler in the form of flax fibers is milled, then the obtained regranulate is dried, and then is plasticized at a temperature from 170 to 190°C and the product is formed.

2. The method according to claim 1, **characterized in that** the plasticized regranulate is formed by injection at a temperature in the range from 175 to 190°C.

3. The method according to claim 2, **characterized in that** the injection is carried out at a pressure from 45 MPa to 55 MPa

4. The method according to claim 2 or 3, **characterized in that** the injection is carried out at a mold temperature of 90°C.
